# FASCICULE DE BREVET EUROPEEN

(11) **EP 3 592 995 B1**
(45) Date de publication et mention de la délivrance du brevet: **08.06.2022**
(21) Numéro de dépôt: 18712947.3
(22) Date de dépôt: 01.03.2018
(51) Int. Cl.: F16B 23/00, F16B 41/00, B25B 13/48, F16B 1/00

(54) **ENSEMBLE VIS DE SECURITE ET SA CLE DE MANOEUVRE**
SICHERHEITSSCHRAUBENANORDNUNG UND BETRIEBSSCHLÜSSEL DAFÜR
SAFETY SCREW ASSEMBLY AND OPERATING KEY THEREOF

(30) Priorité: 09.03.2017 FR 1751936
(43) Date de publication de la demande: 15.01.2020
(73) Titulaire: Concepts et Innovations en Securite Magnetique, 63000 Clermont-Ferrand (FR)
(72) Inventeur: ARLAUD, Jean-Noel, 63270 Vic le Comte (FR); CHABANNE, Fabien, 63450 Chanonat (FR); ROUSSET, Sébastien, 63110 Beaumont (FR)
(74) Mandataire: Dennemeyer & Associates S.A.
(86) Numéro de dépôt international: PCT/FR2018/050479
(87) Numéro de publication internationale: WO 2018/162821

(56) Documents cités:
- FR-A1- 2 736 110
- US-A1- 2002 029 596

## Description

La présente invention concerne un ensemble vis de sécurité et sa clé de manœuvre.

Par le terme vis, on désigne ici un organe de liaison mécanique entre au moins deux éléments. Une telle vis, en métal ou en un autre matériau rigide, est généralement de forme allongée et pourvue, sur au moins une partie de sa longueur, d'un filetage et, à une extrémité, d'une partie dénommée tête et permettant la manœuvre de la vis. Une telle vis est adaptée pour coopérer avec un taraudage complémentaire à son filetage lorsque l'on introduit par vissage, donc par un mouvement de rotation associé à une translation, la vis dans le logement taraudé de forme complémentaire.

La manœuvre d'une telle vis est réalisée par un outil, de type tournevis ou clé, dont une extrémité est de forme complémentaire à la forme d'une empreinte ménagée dans la tête de la vis.

Si l'utilisation de vis permet de réaliser des liaisons entre au moins deux éléments, il n'en demeure pas moins qu'une telle liaison est réversible. En effet, l'outil permettant le vissage de la vis dans son logement taraudé permet également, par un mouvement de rotation en sens inverse, de retirer la vis du taraudage.

Une telle caractéristique est, dans de nombreux cas, recherchée afin de faciliter la maintenance ou le démontage des éléments. En revanche, dans certains cas, il est souhaitable que la possibilité de dévissage et/ou de vissage soit réservée à certains utilisateurs. Une telle restriction est généralement motivée par des besoins de protection et/ou de sécurité, soit de l'utilisateur soit du bien sur lequel se trouve la vis soit des deux.

A titre d'exemples non limitatifs, on peut citer des vis de blocage d'une roue de véhicule, de maintien en position fermée ou ouverte d'un capot de liaison entre deux éléments d'une machine-outil, de fermeture d'un couvercle ou d'une porte d'accès à une zone donnée, que cette zone soit un volume accessible à des êtres vivants, humains ou animaux, ou que cette zone soit un volume intérieur d'un objet au sens large. Dans de tels cas, il convient que, d'une manière générale, il ne soit possible d'ôter et/ou de mettre la vis que si cette action est réalisée par une personne autorisée.

Pour répondre à cette contrainte, on connait des écrous ou boulons dits de sécurité ou antivol. Il s'agit de boulons ou écrous dont la tête est pourvue d'une empreinte, en relief positif ou négatif, avec une forme géométrique spéciale, nécessitant d'avoir un outil spécial avec une empreinte de forme complémentaire pour pouvoir manœuvrer un tel écrou ou boulon. FR-A-2 728 318 divulgue un tel type de boulon. On connait également par WO-A-2012 040 800 des boulons de sécurité où toute tentative de dévissage provoque la rupture d'une partie de la tête, cette partie devenant alors libre en rotation et empêchant toute transmission du mouvement de rotation, en vissage ou dévissage, à l'ensemble du boulon. On connait également par WO-A-2012 148 050 ou WO-A-2005 012 737 des dispositifs de protection, de type capuchon, positionnés sur la tête de la vis et évitant le desserrage et/ou le vol de l'écrou.

Ces différentes solutions, si elles donnent globalement satisfaction comme moyen de limiter le vol d'un objet ou d'éviter un dévissage non autorisée présentent néanmoins certains inconvénients. En effet, le nombre de formes géométriques techniquement possibles pour les empreintes ménagées sur les têtes des vis est relativement limité et il est aisé de se procurer un outil adapté à de telles empreintes.

De ce fait, toute personne possédant un outil adapté est à même de pouvoir manoeuvrer la vis ou le boulon concerné, cela d'autant plus facilement lorsque ces vis ou boulons sont utilisés pour sécuriser le montage des roues de véhicules. En effet, il est facile de se procurer un outil spécifique auprès des fournisseurs habituels du secteur automobile ou de la réparation automobile.

Par ailleurs, pour certaines des solutions divulguées par les documents cités, cela implique une mise en oeuvre définitive et à usage unique du moyen de sécurisation. En d'autres termes, une fois mise en configuration de sécurité, la vis n'est plus démontable, ou du moins pas de manière aisée.

On connait également par US-A-2002/029596 une vis de sécurité avec une clé dédiée permettant de bloquer ou de mettre en libre rotation la tête de la vis. Pour cela, la clé permet de déplacer une pièce magnétique uniquement mobile en translation. Ici, la clé en elle-même n'est pas sécurisée.

Dans ces conditions, l'invention vise à proposer un ensemble vis de sécurité et sa clé de manœuvre, facile d'emploi et adapté pour permettre une mise en place et un retrait rapide de la vis, sans que cette manœuvre par une personne non autorisée soit possible.

A cet effet, l'invention a pour objet un ensemble vis de sécurité et sa clé de manœuvre selon la revendication 1, comportant ladite vis formée d'un corps et d'une tête, la tête étant mobile entre une première position où elle est solidaire en rotation avec le corps et une deuxième position où elle est libre en rotation, la tête étant pourvue sur une face d'une ouverture ou d'un relief de forme complémentaire à un relief ou une empreinte ménagé sur une partie de ladite clé de manœuvre, où une extrémité du corps de la vis comprend une première partie dite stator, et une seconde partie, mobile en rotation, dite rotor, la tête de la vis définissant un logement de réception du rotor, et où l'ensemble comprend un organe de solidarisation, mobile en translation, ledit organe étant mobile entre une première position de solidarisation, dite folle, où la tête est libre en rotation et le rotor et le stator sont solidaires en rotation et une seconde position, dite bloquée, où au moins la tête et le stator sont solidaires en rotation et où la clé est pourvue d'au moins un organe de mise en rotation du rotor.

De cette manière, il est possible, par une rotation de la clé, de mettre en rotation le rotor et, en conséquence, de solidariser ou désolidariser en rotation la tête et le corps de la vis, cela par un mouvement en translation de l'organe de solidarisation. Cette mise en rotation du rotor est, avantageusement, obtenue par une liaison mécanique et magnétique entre la clé et le rotor. Pour cela, des aimants sont insérés dans la clé et dans le rotor. Si on utilise un seul aimant, ce dernier pouvant, en variante, être constitué de plusieurs quartiers aimantés selon des polarités différentes ou si on utilise plusieurs aimants de polarités différentes, on conçoit que la liaison magnétique, donc la solidarisation en rotation, entre le rotor et la clé ne peut être effectuée que pour un couple clé/rotor défini. Ainsi, on sécurise le vissage ou dévissage de la vis, seule une personne autorisée ayant la clé idoine peut utiliser la vis. Par ailleurs, le fait que l'on utilise des moyens magnétiques interdit toute tentative de forçage visant à établir une liaison entre la tête et le rotor par les moyens connus de crochetage d'une serrure.

Selon des aspects avantageux mais non obligatoires de l'invention, un tel ensemble peut comprendre une ou plusieurs des caractéristiques suivantes:
- le stator comprend deux parties cylindriques à base circulaire, la partie de plus petit diamètre ayant un fond pourvu d'au moins deux puits formant des logements de réception de pistons mobiles en translation selon une direction parallèle à l'axe longitudinal du corps.
- Le rotor comprend deux parties de formes complémentaires aux parties du stator, la partie de plus petit diamètre comportant au moins deux puits formant des logements de réception pour des aimants adaptés pour être logés dans le rotor.
- La paroi de la partie de plus grand diamètre du rotor est pourvue d'une rampe hélicoïdale terminée par deux butées.
- L'organe de solidarisation est une bague plate équipée d'au moins une patte s'étendant vers l'extérieur et coplanaire à la partie pleine de la bague.
- L'organe de solidarisation est ladite bague plate équipée de cinq pattes s'étendant vers l'extérieur et coplanaires à la partie pleine de la bague.
- La bague comprend deux reliefs s'étendant vers la lumière interne de la bague, coplanaires à la partie pleine de la bague et adaptés pour coopérer avec les butées de la rampe lorsque la bague est en position sur la partie de plus grand diamètre du rotor.
- La face interne de la tête est pourvue d'une gorge annulaire adaptée pour recevoir la ou les pattes de la bague lorsque la tête est en configuration libre en rotation.
- La face interne de la tête est pourvue d'au moins une rainure longitudinale dont une extrémité débouche sur la gorge annulaire et adaptée pour recevoir au moins une patte de la bague lorsque la tête est solidaire en rotation du rotor.
- La face interne de la tête est pourvue de cinq rainures longitudinales dont une extrémité débouche sur la gorge annulaire et adaptées pour recevoir les cinq pattes de la bague lorsque la tête est solidaire en rotation du corps de la vis.
- La clé de manœuvre comprend ledit au moins un organe de mise en rotation du rotor équipé d'au moins un aimant de polarité complémentaire à ledit au moins un aimant adapté pour être logé dans le rotor.

L'invention sera mieux comprise et d'autres avantages de celle-ci apparaitront plus clairement à la lecture de la description qui va suivre, donnée uniquement à titre d'exemple non limitatif de différents modes de réalisation de l'invention et faite en référence aux dessins annexés dans lesquels:
- la figure 1 est une vue en perspective d'une vis d'un ensemble conforme à un mode de réalisation de l'invention,
- la figure 2 est une vue en perspective, à plus petite échelle, d'une clé de l'ensemble auquel appartient la vis de la figure 1,
- la figure 3 est une vue en perspective, à la même échelle, du corps de la vis de la figure 1, sans la tête,
- la figure 4 représente deux vues en perspective et à la même échelle que la figure 1, de la tête de la vis selon deux directions opposées,
- les figures 5 et 6 sont deux vues en perspective et à plus grande échelle que la figure 1, du rotor selon deux directions opposées,
- la figure 7 est une vue en perspective, à plus grande échelle de l'organe de solidarisation,
- la figure 8 est une vue en perspective, partielle et à plus grande échelle, du détail VIII à la figure 1,
- la figure 9 est une vue en perspective, à une autre échelle, d'une clé d'un ensemble conforme à un autre mode de réalisation de l'invention,
- la figure 10 est une vue en perspective, partielle, du détail X,
- les figures 11 et 12 sont des vues en coupe de la vis selon respectivement des lignes de coupe longitudinales différentes à la figure 1 lorsque la tête est en position folle en rotation,
- la figure 13 est une vue en coupe, partielle et à plus grande échelle, du détail XIII à la figure 12,
- les figures 14 et 15 sont des vues similaires et à la même échelle, respectivement, aux figures 12 et 13 lorsque que la tête est en position bloquée en rotation, la figure 15 étant une vue à plus grande échelle du détail XV à la figure 14,
- la figure 16 est une vue en coupe, à une autre échelle, de la clé de la figure 9 en position sur la tête de la vis de la figure 1, en position bloquée en rotation et
- la figure 17 est une vue en coupe partielle et à plus grande échelle du détail XVII.

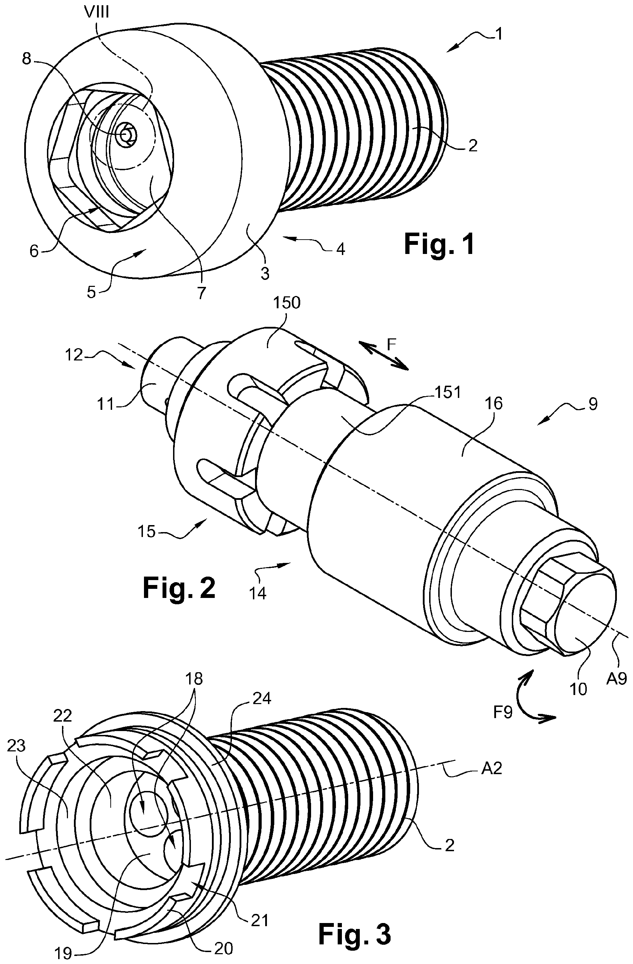

La figure 1 illustre une vis 1 appartenant à un ensemble vis et clé conforme à un mode de réalisation de l'invention. La vis 1 comprend un corps cylindrique à base circulaire et fileté 2. La longueur, le diamètre et le pas de filetage du corps 2 sont préférentiellement choisis parmi les données normalisées pour les vis. En variante, ces données sont spécifiques et adaptées à l'utilisation de la vis 1.

Une tête de vis 3, cylindrique à base circulaire, équipe une extrémité 4 du corps 2. L'extrémité 4 est constitutive du stator de la vis 1. La face externe 5 de la tête 3 est pourvue d'une ouverture traversante 6. Ici, l'ouverture 6 est pentagonale à parois rectilignes. En variante non illustrée, elle est d'une autre forme, par exemple hexagonale ou octogonale à parois incurvées.

Un fond 7 obture une partie de l'ouverture 6, comme cela est visible à la figure 1. Le fond 7 est indépendant de la tête 3. Il est constitutif d'un rotor 25. Le fond 7 est plat et réalisé en un matériau perméable aux ondes magnétiques. En l'espèce il est en métal.

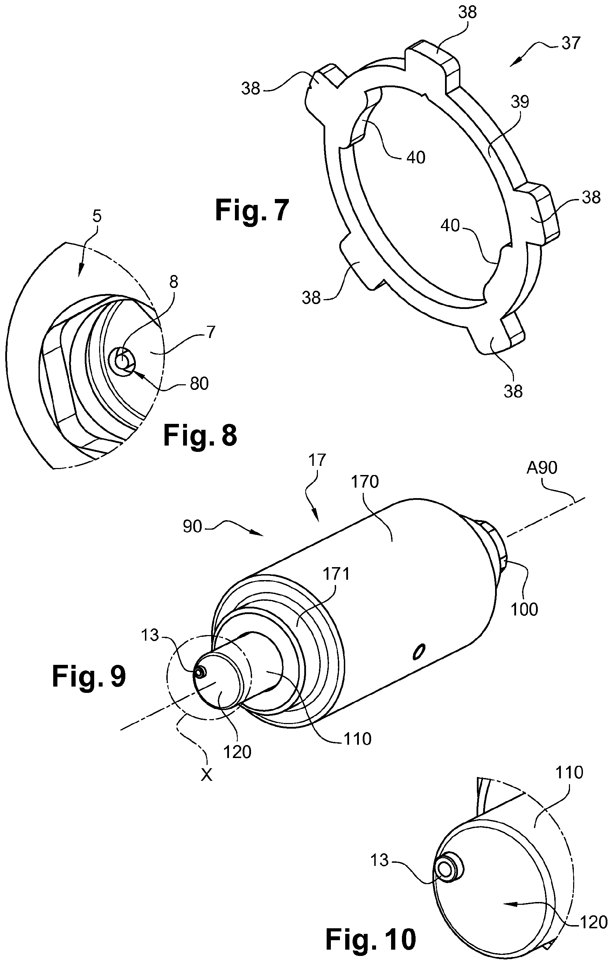

Un ergot 8 est fixé perpendiculairement au fond 7, au voisinage de la périphérie de ce dernier. Comme cela ressort de la figure 8, l'ergot 8 est de forme cylindrique et positionné au centre d'un puit 80, de sorte que son sommet soit coplanaire avec le fond 7. Dans un autre mode de réalisation, le fond 7 est pourvu de plus d'un ergot et/ou de formes différentes. Par exemple, un ou deux ergots 8 s'étendent perpendiculairement à partir du fond 7.

La figure 2 illustre une clé de manœuvre 9 conforme à un mode de réalisation. La clé 9 est de forme cylindrique. Avantageusement, elle est réalisée en un métal insensible à la corrosion, par exemple en acier inoxydable. En variante, elle est en polymères ou en un matériau composite à base de métal et de polymère.

Une extrémité de la clé 9 est formée par un relief 10 de forme complémentaire à la forme de l'ouverture 6 de la tête 3. Ici, le relief 10 est pentagonal. Une fois introduit dans l'ouverture 6, le relief 10 a des dimensions telles qu'elles permettent, par rotation de la clé 9 autour de son axe longitudinal A9, de tourner la tête 3 de la vis dans un sens ou dans l'autre, selon la double flèche F9. En d'autres termes, le relief 10 permet le vissage ou le dévissage de la vis 1. La clé 9 permet de réaliser un serrage avec un couple de serrage donné et défini pour chaque ensemble vis et clé, selon les besoins.

L'extrémité opposée de la clé 9 au relief 10 est formée par un relief 11, cylindrique à base circulaire et à sommet plat et circulaire. Les dimensions du relief 11 sont adaptées pour permettre l'introduction du relief 11 dans l'ouverture 6 mais sans que la rotation du relief 11 entraine la rotation de la tête 3.

La figure 9 illustre un autre mode de réalisation d'une clé de manoeuvre 90 conforme à l'invention. La clé 90 est également de forme cylindrique. Les éléments fonctionnellement identiques entre les clés 9 ; 90 ont les mêmes références, multipliées par un facteur dix. Ainsi, le relief d'extrémité 100 de la clé 90 est identique au relief d'extrémité 10 de la clé 9. Le relief 110 de la clé 90 est identique au relief 11 de la clé 9.

Comme cela ressort de la figure 9, le sommet 120 du relief 110 est plan et circulaire. Il est équipé d'un relief creux 13 de forme complémentaire à celle de l'ergot 8 et du puits 80 situés sur le fond 7. Le sommet 12 du relief 11 est similaire au sommet 120 du relief 110. Il est également pourvu d'un relief creux, similaire au relief 13 et non visible aux différentes figures.

On conçoit que lors de l'introduction du relief 11 ou 110 dans l'ouverture 6, il y a une complémentarité de forme entre l'ergot 8, le puit 80 et le relief 13 de sorte à positionner angulairement le relief 11 ou 110 dans l'ouverture 6 et sur le fond 7.

A l'intérieur du relief 11 ; 110 donc derrière le sommet plan métallique 12 ; 120, au moins un aimant cylindrique est logé. Un tel aimant peut être monopolaire ou multipolaire. Selon la complexité du codage désirée, on utilisera plusieurs aimants, de préférence multipolaires. En l'espèce, selon un mode de réalisation avantageux de l'invention, il y a trois aimants multipolaires. Par ce terme, on désigne des aimants réalisés à partir de plusieurs parties, ici des quartiers de cylindre, qui alternent leurs polarités. Ainsi, une extrémité d'un tel aimant présente une alternance donnée de pôles sud et nord, avec une orientation angulaire donnée. Une telle disposition est connue en soi d'EP-A-1 601 848.

Ainsi, les clés 9 ; 90 de deux modes de réalisation différents de l'invention ont des formes cylindriques avec des extrémités 10; 100 et 11 ; 110 identiques. Elles différents par leurs parties centrales également nommées corps principal.

Le corps principal 14 de la clé 9 est formé de deux manchons coaxiaux 15, 16. Le manchon 15 comporte une zone 150 de diamètre externe supérieur à celui de l'autre partie 151 constitutive du manchon 15. La zone 150 forme ainsi une bague de préhension du manchon 15. La zone 150 permet, par un mouvement de translation selon la double flèche F, de faire rentrer ou sortir l'extrémité 11 dans le manchon 15, plus particulièrement dans la partie 151. Ainsi, lors des périodes de non utilisation de la clé 9, on assure la protection du relief d'extrémité 11 et, plus précisément, de son sommet 12. En effet, le sommet plan 12 doit être protégé contre tout choc et/ou déformation afin de garantir l'intégrité des aimants logés dans l'extrémité 11 et pour permettre la solidarisation de l'ergot 8 avec l'ergot 13. On conçoit que, pour permettre le passage du rayonnement magnétique émis ou reçu par les aimants insérés dans le relief 11, le sommet 12 est de faible épaisseur, ce qui, de facto, diminue sa résistance mécanique aux chocs et aux déformations. Dans un mode de réalisation non illustré, un capuchon de protection, par exemple vissable ou clipsable, est prévu pour protéger le relief 11 ou 110.

Le manchon 16, dont le diamètre externe est voisin du diamètre externe de la partie 150 assure la prise et la manœuvre de la clé 9 lors des opérations de vissage ou dévissage de la vis 1.

La clé 90 comprend un corps principal 17 comportant un manchon externe 170. Le manchon 170 reçoit un manchon interne, coaxial 171 pourvu du relief d'extrémité 110. Le manchon 171 se visse, ou en variante coulisse, dans le manchon 170. De cette manière, on assure, par un mouvement hélicoïdal ou de translation orienté selon une direction parallèle à l'axe longitudinal A90 de la clé 90, l'entrée et la sortie du relief d'extrémité 110 du manchon 171.

La figure 3 illustre le corps 2 de la vis seul, sans la tête 3.

L'extrémité 4 non filetée du corps 2 est de forme cylindrique, à base circulaire et ouverte. L'extrémité 4 comprend au moins un, avantageusement trois, logements 18 en forme de puits cylindriques à base circulaire. Les puits 18 sont adaptés pour recevoir des pistons, mobiles en translation selon une direction parallèle à l'axe longitudinal A2 du corps 2. Pour plus de lisibilité, les pistons ne sont pas visibles à la figure 3. Les logements 18, avec les pistons et l'extrémité 4, définissent un stator.

Les logements 18 ont leurs ouvertures d'accès coplanaires au fond 19 de l'extrémité 4. Le fond 19 est plan et circulaire.

La paroi extérieure cylindrique 20 de l'extrémité 4 est pourvue d'au moins une, avantageusement cinq, encoches rectangulaires 21 ménagées à partie du bord supérieur libre de la paroi 20. Les encoches 21 sont régulièrement réparties sur la paroi 20.

Le volume intérieur de l'extrémité 4 est défini par deux portions de cylindre coaxiales et de diamètres différents. La portion 22, de plus petit diamètre s'étend du fond 19 sur environ la moitié de la hauteur de la paroi 20.

La portion 23 est la portion terminale de l'extrémité 4 et elle prolonge la portion 22 vers l'extérieur. Ainsi, la portion 23 de plus grand diamètre définit l'accès au volume de l'extrémité 4, donc au stator tel que défini précédemment.

Une gorge annulaire 24 est ménagée sur la face externe de la paroi 20, sensiblement au niveau de zone de jonction entre les parties 22 et 23.

L'extrémité 4 forme un logement ayant une ouverture d'accès de diamètre supérieur à celui du fond du logement. L'extrémité 4 est adaptée pour recevoir une pièce de forme complémentaire 25 dénommée rotor.

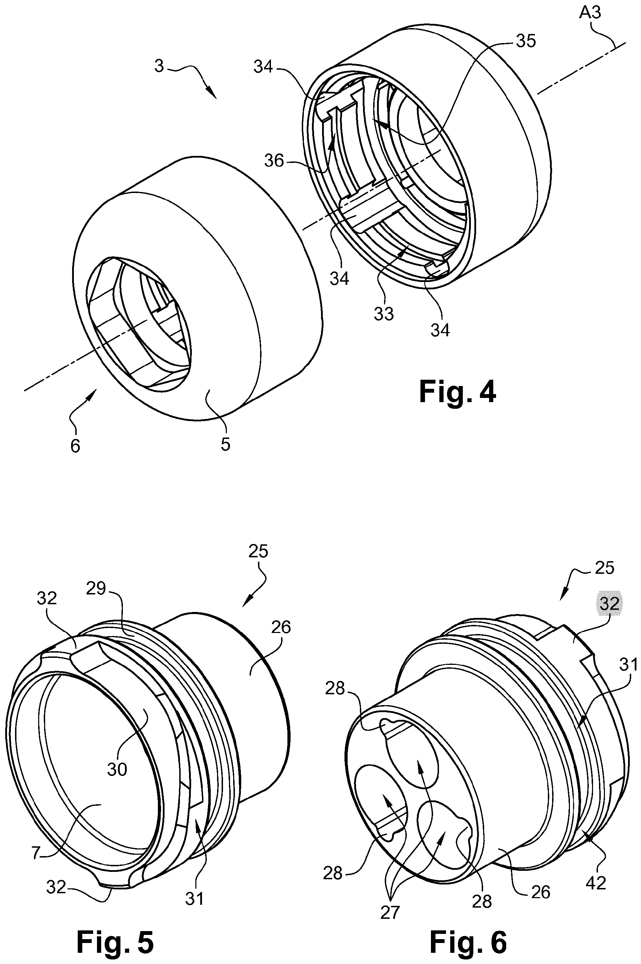

Ce rotor 25 est illustré aux figures 5 et 6. Il comprend une portion cylindrique à base circulaire 26 dont le diamètre externe est inférieur au diamètre interne de la portion 22, de sorte à ce que la portion 26, une fois introduite dans la portion 22, soit maintenue dans cette dernière tout en étant libre en rotation. La portion 26 est pourvue d'au moins un, avantageusement trois, puits 27.

Les puits 27 sont cylindriques à base circulaire et pourvus chacun d'une rainure longitudinale 28. Les puits 27 sont adaptés pour recevoir, avec une position angulaire donnée, des aimants, multipolaires ou non, non illustrés et connus en soi. Chaque aimant est immobilisé en rotation dans son puit 27 par un relief ménagé sur l'aimant et introduit dans la rainure 28.

Le rotor 25 comprend une seconde portion 29, également cylindrique à base circulaire.

Le fond 7 de la portion 29 est commun avec l'extrémité fermée de la portion 26 et donc définit le fond des puits 27. Le fond 7 est visible lorsque le rotor 25 est en place dans l'extrémité 4 et que la tête 3 coiffe le rotor 25. Ainsi, le fond 7 de la portion 29 du rotor 25 forme une interface plane, visible, entre l'extérieur et les aimants du rotor, comme représenté à la figure 1.

La face externe de la paroi 30 de la portion 29 est équipée d'une rampe hélicoïdale 31. La rampe 31 comprend, aux points morts haut et bas, des butées 32.

La figure 4 illustre la tête 3 seule, selon deux angles de vue. La tête 3 est en forme de capuchon cylindrique à base circulaire, ouvert totalement à une extrémité et pourvue d'une ouverture 6 ménagée sur la face opposée 5 de la tête 3. La face interne 33 de la tête 3 est pourvue d'au moins une, avantageusement cinq, rainures longitudinales 34, ici à section transversale rectangulaire, disposées parallèlement à l'axe longitudinal A3 de la tête 3. Une gorge annulaire 35 est ménagée sur la face 33 de la tête 3 et située à une extrémité des rainures 34, au voisinage du fond de la tête 3, donc de la face 5. Une autre gorge annulaire 36 est ménagée sur la face interne 33. Cette gorge 36 est parallèle à la gorge 35 et destinée à recevoir, partiellement, un jonc de liaison ou clips lorsque ce jonc ou clips est introduit, également partiellement, dans la gorge annulaire 24 de la paroi 20 de l'extrémité 4 du corps lorsque la tête 3 est en position sur le corps 2. Ainsi, on interdit tout démontage de la tête 3 tout en autorisant sa rotation par rapport au corps 2.

La figure 7 illustre un mode de réalisation d'un organe de solidarisation en rotation 37 du rotor 25 avec la tête 3. L'organe 37 est configuré en bague plate. Au moins une, avantageusement cinq pattes, ici rectangulaires, 38 s'étendent vers l'extérieur, à partir de la partie pleine 39 de la bague 37. Les pattes 38 sont coplanaires avec la partie pleine 39. Deux reliefs 40, également coplanaires à la partie pleine 39, s'étendent à partir de celle-ci en direction de la lumière centrale de la bague 37. Les pattes 38 sont de formes et dimensions complémentaires à celles des rainures 34.

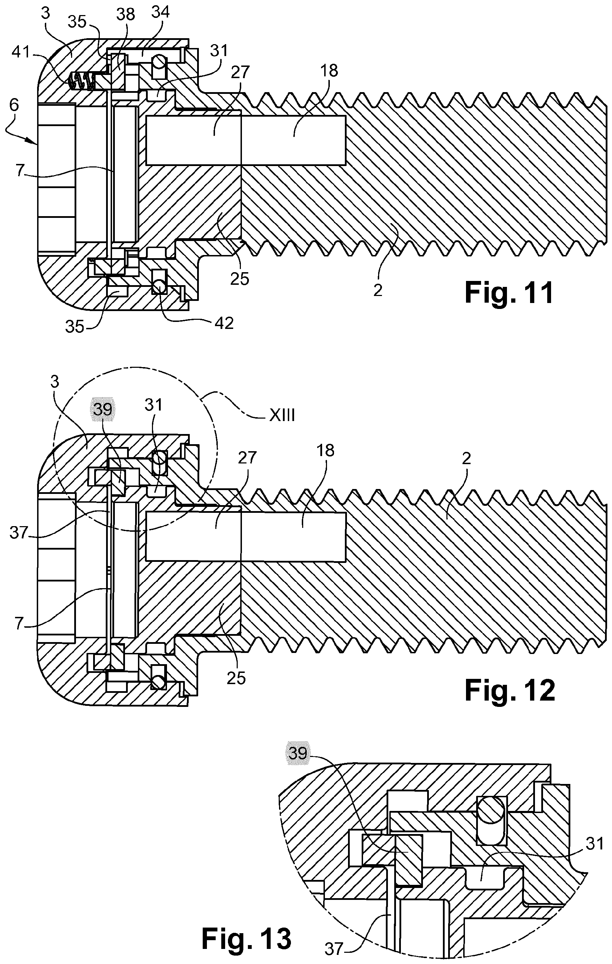

Les figures 11 à 17 illustrent les diverses positions des éléments constitutifs d'une vis 1 ainsi que la manoeuvre de la vis à l'aide d'une clé selon un mode de réalisation de l'invention.

Les figures 11 et 12 représentent la vis 1 en coupe selon deux plans de coupe longitudinaux formant entre eux un angle voisin de 120°, en une configuration où la tête 3 est dite folle en rotation.

Dans cette configuration, la tête 3, montée sur le corps 2, est libre en rotation autour des axes longitudinaux A2 et A3 confondus, alors que le corps 2 est immobile en rotation. Le rotor 25 est solidaire en rotation du corps 2, plus particulièrement de l'extrémité 4. Ainsi, la face interne 33 de la tête 3 n'est pas solidaire en rotation de la paroi 20 de l'extrémité 4 du corps 2 tout en étant relié à cette dernière. En d'autres termes, la tête 3 est folle en rotation mais elle est solidaire du corps 2 et elle ne peut pas être désolidarisée de ce dernier.

Cette configuration est obtenue par le montage de la bague 37 entre la tête 3 et le rotor 25. La bague 37 est montée autour de la rampe hélicoïdale 31 du rotor 25, celui-ci étant positionné dans l'extrémité 4, en ayant la portion 26 du rotor 25 pourvue des aimants en regard des puits 18, dans la partie 22 de l'extrémité 4.

Le rotor 25 est maintenu en position dans l'extrémité 4. Un joint d'étanchéité, non illustré, est introduit dans une gorge annulaire 42, visible à la figure 6, et réalisée sur la face externe de la partie 29.

Lorsque la bague 37 est sur la rampe hélicoïdale 31, les pattes 38 s'étendent vers l'extérieur de l'extrémité 4 en passant par les encoches 21. Le mouvement de translation généré par la rampe hélicoïdale 31 du rotor 35 est limité par les butées 32 du rotor 25 lorsqu'elles sont en contact avec les reliefs 40 de la bague 37. Le déplacement de la bague 37 est limité par la rotation du rotor 25, rotation limitée à environ un quart de tour par le contact entre les reliefs 40 de la bague 37 sur les butées 32 de la rampe 31. Les pattes 38 insérées dans les encoches 21 assurent quant à elles la solidarisation en rotation de la bague 37 et de l'extrémité 4 du corps 2. En d'autres termes, la bague 37 assure une liaison entre la tête 3 et le corps 2.

La bague 37 lorsqu'elle est position haute sur la rampe 31 est positionnée au fond de la tête 3, au niveau de la gorge 35. Dans ce cas, les pattes 38 se sont déplacées en translation, de manière guidée, dans les encoches 21 et les rainures 34 de la tête 3. En fin de course, du fait que les rainures 34 débouchent sur la gorge 35, les pattes 38 sont de facto insérées dans la gorge 35. On conçoit que ce déplacement en translation de la bague 37 résulte du mouvement de rotation du rotor 25.

Lorsque l'on initie un mouvement de rotation de la tête 3, quel que soit le sens de rotation et/ou l'amplitude du mouvement, on décale les rainures 34 par rapport aux pattes 38 de la bague 37 qui, elle, reste immobile en rotation. Les pattes 38 n'étant plus en prise avec les rainures 34, la tête 3 est désolidarisée en rotation de l'extrémité 4 du corps 2 de la vis 1.

Les pattes 38 en position dans la gorge 35 autorisent la libre rotation de la tête 3 par rapport au corps 2 de la vis 1. Dans la mesure où l'ouverture 6 ménagée dans la tête 3 permet le vissage ou le dévissage de la vis 1, il n'est pas possible d'effectuer ces opérations : seule la tête 3 est mise en rotation et non le reste de la vis 1. Cette configuration dite folle est donc une configuration sécurisée, aucune modification de la position de la vis 1, en serrage ou non, d'éléments n'étant possible.

Le maintien en position de la bague 37 dans la gorge 35 est optimisé par des ressorts 41 occupant le fond de la tête 3 selon un sens de poussée et, selon le sens inverse de poussée, par le rotor 25 lui-même.

En effet, dans cette configuration, des ressorts, non illustrés, insérés dans les puits 18 repoussent les pistons en direction du rotor 25. Les extrémités des pistons, sous l'action des ressorts, sont partiellement introduites dans les logements 27 du rotor 25 qui reçoivent les aimants.

Dans cette configuration, le rotor 25 est bloqué en rotation par les pistons par rapport au reste du corps 2. Dans cette position, la bague 37 étant en position dans la gorge 35, seule la tête 3 peut librement tourner en rotation autour des axes A2, A3 confondus.

Cette configuration, également dénommée débrayée, correspond également à une configuration dite de codage des aimants du rotor 25. En effet, les aimants sont immobiles en rotation et en translation.

Pour passer de cette position à une position dite embrayée dans laquelle la tête 3 est solidaire en rotation avec le corps 2, il est nécessaire de manœuvrer le rotor 25 avec une clé 9 ou 90.

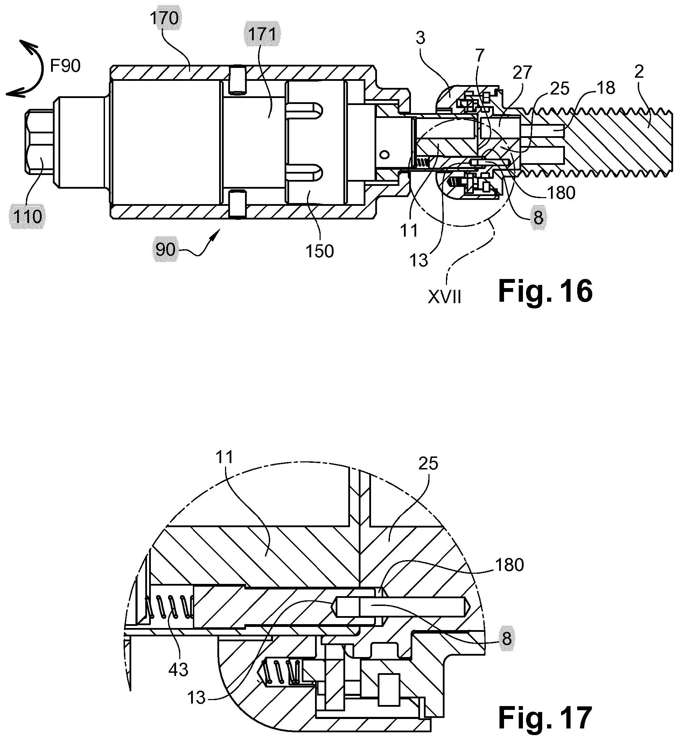

Les figures 16 et 17 illustrent cette manoeuvre avec une clé 90, étant entendu que la manœuvre est identique avec une clé 9. L'extrémité 120 est introduite par l'ouverture 6 et positionnée de sorte que les ergots 13 et 8 sont en contact. De cette manière on aligne les aimants du rotor 25 avec ceux du relief 120. En d'autres termes, le positionnement est guidé, les ergots 13 et 8 servant de détrompeurs.

Comme cela ressort de la figure 17, un ressort 43 repousse l'ergot 13 sur l'ergot 8, sécurisant ainsi le positionnement du relief 120 sur le fond 7 du rotor 25. Dans cette configuration d'alignement des aimants du rotor 25 et de la clé 90, les polarités de même signe, nord ou sud, des aimants du relief 120 et du rotor 25 sont en regard.

Du fait que les aimants du rotor 25 sont mobiles en translation dans les logements 27, cette translation étant guidée par les rainures 28 qui empêchent les aimants de pivoter, les aimants du rotor 25 se déplacent en direction du stator, à savoir en direction des puits 18 de l'extrémité 4. De cette manière, on repousse les pistons au fond des puits 18. Les pistons ne sont plus partiellement introduits dans les logements 27 et donc ne bloquent plus en rotation le rotor 25.

Il est alors possible, avec un mouvement de la clé 90, de mettre en rotation, selon la double flèche F90, le rotor 25. Ce mouvement de rotation est possible par la liaison entre les ergots 13 et 8. Le mouvement de rotation du rotor 25 entraine la bague 37 en translation sur la rampe hélicoïdale 31. La translation n'est possible que lorsque les pattes 38 de la bague 37 sont en regard des rainures 34 de la tête.

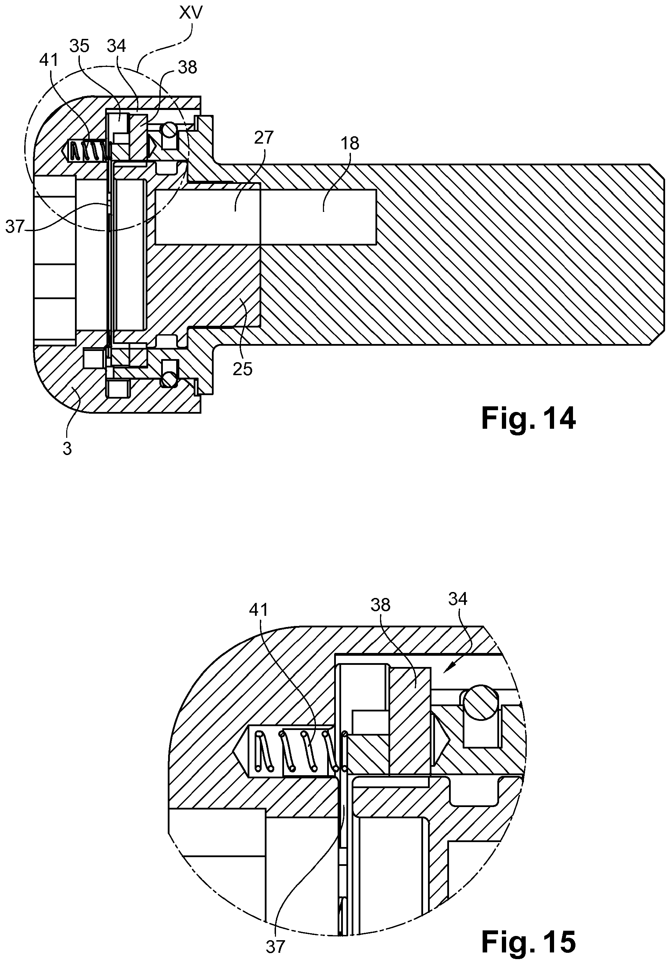

Comme illustré aux figures 14 et 15, lorsque les pattes 38 sont en prise dans les rainures 34, la tête 3 est solidaire en rotation de la bague 37 et celle-ci est, par blocage des reliefs 40 sur les butées 32 en position basse sur la rampe 31, solidaire en rotation du stator, donc de l'extrémité 4 du corps 2.

En d'autres termes, l'organe de solidarisation en forme de bague 37 assure une liaison entre le stator, formé par l'extrémité 4 et les pistons, et la tête 3, ces éléments étant immobiles l'un par rapport à l'autre. Il est alors possible pour l'usager, avec le relief 10 ou 100 de la clé 9 ou 90 de visser ou dévisser la vis 1.

La présence d'un fond 7 plan, sans aucune ouverture ou plan de jonction interdit tout forçage frauduleux du rotor 25. En d'autres termes, du fait de la présence d'aimants avec des polarités différentes, seule une clé donnée permet la manœuvre du rotor 25 et donc de la vis 1, étant entendu qu'une telle clé n'est pas copiable si la disposition du ou des aimants du rotor 25 n'est pas connue.

Un tel ensemble trouve, par exemple, son application pour sécuriser la fermeture d'un capot d'accès à des éléments de commande et/ou de fonctionnement d'une machine-outil, d'une barrière automatique, d'une borne d'accès, d'un parcmètre, d'un mât de feu tricolore, d'un lampadaire, d'un distributeur automatique de produits ou de services, de boites aux lettres, de coffret de sécurité ou électriques ou autres.

Dans d'autres modes de réalisation, une clé permet la manœuvre de plusieurs vis ayant un même codage magnétique.

En variante, une clé peut recevoir des reliefs 11 ; 110, amovibles ou non, permettant la manœuvre de plusieurs vis ou jeux de vis ayant des codages différents.

Dans un autre mode de réalisation, la clé est pourvue de plus d'un relief recevant des aimants, par exemple un jeu de reliefs équipés chacun d'aimants codant pour une série de vis donnée.

En variante, la manœuvre de la vis est effectuée par un outil connu en soi, la configuration de l'ouverture de la tête correspondant à une forme géométrique normée.

Dans un autre mode de réalisation, l'ouverture de la tête est configurée pour ne recevoir que le relief équipé des aimants. Le vissage ou dévissage de la vis s'effectuant par une clé en prise avec l'extérieur de la tête, celle-ci étant, par exemple, de forme extérieure pentagonale.

Dans un autre mode de réalisation non illustré, le relief assurant la manœuvre de la tête de la vis est creux et reçoit, dans son volume interne, le relief équipé des aimants. Ce dernier est mobile en translation, par exemple en coulissant, dans le premier relief. Ainsi, on passe d'une configuration où, le relief avec les aimants étant sorti, seule la mise en rotation du rotor est possible à une configuration où, une fois rentré dans le relief de manœuvre de la tête, la mise en rotation de la vis est possible. En d'autres termes, dans ce mode de réalisation, un relief sert de manchon de protection à l'autre.

## Revendications

1. Ensemble vis de sécurité (1) et sa clé de manœuvre (9 ; 90) comportant ladite vis (1) formée d'un corps (2) et d'une tête (3), la tête (3) étant mobile entre une première position où elle est solidaire en rotation avec le corps (2) et une deuxième position où elle est libre en rotation, la tête (3) étant pourvue sur une face (5) d'une ouverture (6) ou d'un relief de forme complémentaire à un relief (10 ; 100) ou une empreinte ménagé sur une partie de ladite clé de manœuvre (9 ; 90), où une extrémité (4) du corps (2) de la vis (1) comprend une première partie (4, 18, 20, 21, 22, 23) dite stator, et une seconde partie (25), mobile en rotation, dite rotor, la tête (3) de la vis (1) définissant un logement de réception du rotor (25), et où l'ensemble comprend un organe de solidarisation (37), mobile en translation, ledit organe (37) étant mobile entre une première position de solidarisation, dite folle, où la tête (3) est libre en rotation et le rotor (25) et le stator (4, 18, 20, 21, 22, 23) sont solidaires en rotation et une seconde position, dite bloquée, où au moins la tête (3) et le stator (4, 18, 20, 21, 22, 23) sont solidaires en rotation et où la clé (9 ; 90) est pourvue d'au moins un organe (11 ; 110) de mise en rotation du rotor (25).

2. Ensemble selon la revendication 1, **caractérisé en ce que** le stator (4, 18, 20, 21, 22, 23) comprend deux parties cylindriques à base circulaire (22, 23), la partie (22) de plus petit diamètre ayant un fond (19) pourvu d'au moins deux puits (18) formant des logements de réception de pistons mobiles en translation selon une direction parallèle à l'axe longitudinal (A2) du corps (2).

3. Ensemble selon la revendication 2, **caractérisé en ce que** le rotor (25) comprend deux parties (26, 29) de formes complémentaires aux parties (22, 23) du stator, la partie (26) de plus petit diamètre comportant au moins deux puits (27) formant des logements de réception pour des aimants adaptés pour être logés dans le rotor (25).

4. Ensemble selon la revendication 3, **caractérisé en ce que** la paroi (30) de la partie (29) de plus grand diamètre du rotor (25) est pourvue d'une rampe hélicoïdale (31) terminée par deux butées (32).

5. Ensemble selon la revendication 1, **caractérisé en ce que** l'organe de solidarisation (37) est une bague plate équipée d'au moins une patte (38) s'étendant vers l'extérieur et coplanaire à la partie pleine (39) de la bague (37).

6. Ensemble selon la revendication 5, **caractérisé en ce que** l'organe de solidarisation (37) est ladite bague plate équipée de cinq pattes (38) s'étendant vers l'extérieur et coplanaires à la partie pleine (39) de la bague (37).

7. Ensemble selon l'une des revendications 5 ou 6, **caractérisé en ce que** la bague (37) comprend deux reliefs (40) s'étendant vers la lumière interne de la bague (37), coplanaires à la partie pleine (39) de la bague et adaptés pour coopérer avec les butées (32) de la rampe (31) lorsque la bague est en position sur la partie (29) de plus grand diamètre du rotor (25).

8. Ensemble selon la revendication 5 ou 6, **caractérisé en ce que** la face interne (33) de la tête (3) est pourvue d'une gorge annulaire (35) adaptée pour recevoir la ou les pattes (38) de la bague (37) lorsque la tête (3) est en configuration libre en rotation.

9. Ensemble selon la revendication 8, **caractérisé en ce que** la face interne (33) de la tête (3) est pourvue d'au moins une rainure longitudinale (34) dont une extrémité débouche sur la gorge annulaire (35) et adaptée pour recevoir au moins une patte (38) de la bague (37) lorsque la tête (3) est solidaire en rotation du corps (2).

10. Ensemble selon la revendication 9, **caractérisé en ce que** la face interne (33) de la tête (3) est pourvue de cinq rainures longitudinales (34) dont une extrémité débouche sur la gorge annulaire (35) et adaptées pour recevoir cinq pattes (38) de la bague (37) lorsque la tête (3) est solidaire en rotation du rotor (25).

11. Ensemble selon la revendication 3, **caractérisé en ce que** la clé de manoeuvre (9 ; 90) comprend ledit au moins un organe (11 ; 110) de mise en rotation du rotor (25) équipé d'au moins un aimant de polarité complémentaire à ledit au moins un aimant adapté pour être logé (27) dans le rotor (25).

## Patentansprüche

1. Sicherheitsschraubenanordnung (1) und ihr Betätigungsschlüssel (9; 90), der die Schraube (1) umfasst, die aus einem Körper (2) und einem Kopf (3) gebildet ist, wobei der Kopf (3) zwischen einer ersten Position, in der er drehfest mit dem Körper (2) verbunden ist, und einer zweiten Position, in der er in Drehung frei ist, beweglich ist, wobei der Kopf (3) auf einer Fläche (5) mit einer Öffnung (6) oder mit einem Relief mit komplementärer Form zu einem/einer auf einem Teil des Betätigungsschlüssels (9; 90) eingerichteten Relief (10; 100) oder Prägung versehen ist, wobei ein Ende (4) des Körpers (2) der Schraube (1) einen ersten Teil (4, 18, 20, 21, 22, 23), Stator genannt, und einen zweiten Teil (25), der in Drehung beweglich ist, Rotor genannt, umfasst, wobei der Kopf (3) der Schraube (1) eine Empfangsaufnahme des Rotors (25) definiert, und wobei die Anordnung ein Element zur festen Verbindung (37) umfasst, das in Verschiebung beweglich ist, wobei das Element (37) zwischen einer ersten Befestigungsposition, die frei laufend genannt wird, in der der Kopf (3) in Drehung frei ist, und der Rotor (25) und der Stator (4, 18, 20, 21, 22, 23) drehfest sind, und einer zweiten Position, die blockiert genannt wird, in der mindestens der Kopf (3) und der Stator (4, 18, 20, 21, 22, 23) drehfest sind, beweglich ist, und in der der Schlüssel (9; 90) mit mindestens einem Element (11; 110) zum Indrehungversetzen des Rotors (25) versehen ist.

2. Anordnung nach Anspruch 1, **dadurch gekennzeichnet, dass** der Stator (4, 18, 20, 21, 22, 23) zwei zylindrische Teile mit kreisförmiger Basis (22, 23) umfasst, wobei der Teil (22) mit kleinerem Durchmesser einen Boden (19) aufweist, der mit mindestens zwei Schächten (18) versehen ist, die Empfangsaufnahmen für Kolben bilden, die entlang einer Richtung parallel zu der Längsachse (A2) des Körpers (2) in Translation beweglich sind,

3. Anordnung nach Anspruch 2, **dadurch gekennzeichnet, dass** der Rotor (25) zwei Teile (26, 29) mit Formen, die zu den Teilen (22, 23) des Stators komplementär sind, umfasst, wobei der Teil (26) mit kleinerem Durchmesser mindestens zwei Schächte (27) umfasst, die Empfangsaufnahmen für Magnete bilden, die dazu angepasst sind, in dem Rotor (25) aufgenommen zu sein.

4. Anordnung nach Anspruch 3, **dadurch gekennzeichnet, dass** die Wand (30) des Teils (29) des Rotors (25) mit größerem Durchmesser mit einer spiralförmigen Rampe (31), die mit zwei Anschlägen (32) endet, versehen ist.

5. Anordnung nach Anspruch 1, **dadurch gekennzeichnet, dass** das Element zur festen Verbindung (37) ein flacher Ring ist, der mit mindestens einer Pratze (38) ausgestattet ist, die sich nach außen erstreckt und zu dem massiven Teil (39) des Rings (37) koplanar ist.

6. Anordnung nach Anspruch 5, **dadurch gekennzeichnet, dass** das Element zur festen Verbindung (37) der flache Ring ist, der mit fünf Pratzen (38) ausgestattet ist, die sich nach außen erstrecken und zu dem massiven Teil (39) des Rings (37) koplanar sind.

7. Anordnung nach einem der Ansprüche 5 oder 6, **dadurch gekennzeichnet, dass** der Ring (37) zwei Reliefs (40) umfasst, die sich zu dem Innenlumen des Rings (37) erstrecken, die mit dem massiven Teil (39) des Rings koplanar und dazu geeignet sind, mit den Anschlägen (32) der Rampe (31) zusammenzuwirken, wenn der Ring auf dem Teil (29) des Rotors (25) mit größerem Durchmesser in Position ist.

8. Anordnung nach Anspruch 5 oder 6, **dadurch gekennzeichnet, dass** die Innenfläche (33) des Kopfes (3) mit einer ringförmigen Nut (35) versehen ist, die dazu angepasst ist, die Pratze(n) (38) des Rings (37) aufzunehmen, wenn sich der Kopf (3) in der in Drehung freien Konfiguration befindet.

9. Anordnung nach Anspruch 8, **dadurch gekennzeichnet, dass** die Innenfläche (33) des Kopfes (3) mit mindestens einer Längsnut (34) versehen ist, von der ein Ende in die ringförmige Nut (35) mündet und dazu angepasst ist, mindestens eine Pratze (38) des Rings (37) aufzunehmen, wenn der Kopf (3) drehfest mit dem Körper (2) verbunden ist.

10. Anordnung nach Anspruch 9, **dadurch gekennzeichnet, dass** die Innenfläche (33) des Kopfes (3) mit fünf Längsnuten (34) versehen ist, von denen ein Ende in die ringförmige Nut (35) mündet, und die dazu angepasst sind, fünf Pratzen (38) des Rings (37) aufzunehmen, wenn der Kopf (3) mit dem Rotor (25) drehfest ist.

11. Anordnung nach Anspruch 3, **dadurch gekennzeichnet, dass** der Betätigungsschlüssel (9; 90) das mindestens eine Element (11; 110) zum Indrehungversetzen des Rotors (25) umfasst, das mit mindestens einem Magneten mit komplementärer Polarität zu dem mindestens einen Magneten, der dazu angepasst ist, in dem Rotor (25) aufgenommen (27) zu werden, ausgestattet ist.

## Claims

1. Safety screw assembly (1) and operating key (9; 90) thereof comprising said screw (1) formed of a body (2) and a head (3), the head (3) being movable between a first position where it rotates integrally with the body (2) and a second position where it rotates freely, the head (3) being provided on one face (5) with an opening (6) or with a relief having a shape complementary to a relief (10; 100) or an imprint made on a part of said operating key (9; 90), where one end (4) of the body (2) of the screw (1) comprises a first part (4, 18, 20, 21, 22, 23) called the stator, and a second part (25), movable in rotation, called the rotor, the head (3) of the screw (1) defining a housing for receiving the rotor (25), and where the assembly comprises a securing member (37), which is movable in translation, said securing member (37) being movable between a first securing position, called idle, where the head (3) is free to rotate and the rotor (25) and the stator (4, 18, 20, 21, 22, 23) rotate together and a second position, called blocked, where at least the head (3) and the stator (4, 18, 20, 21, 22, 23) rotate together and where the key (9; 90) is provided with at least one member (11; 110) for rotating the rotor (25).

2. Assembly according to Claim 1, **characterised in that** the stator (4, 18, 20, 21, 22, 23) comprises two cylindrical parts with a circular base (22, 23), the part (22) of smaller diameter having a bottom (19) provided with at least two wells (18) forming housings for receiving pistons movable in translation along a direction parallel to the longitudinal axis (A2) of the body (2).

3. Assembly according to Claim 2, **characterised in that** the rotor (25) comprises two parts (26, 29) of shapes complementary to the parts (22, 23) of the stator, the part (26) of smaller diameter comprising at least two wells (27) forming receiving housings for magnets adapted to be housed in the rotor (25).

4. Assembly according to Claim 3, **characterised in that** the wall (30) of the part (29) of larger diameter of the rotor (25) is provided with a helical ramp (31) ending in two stops (32).

5. Assembly according to Claim 1, **characterised in that** the securing member (37) is a flat ring fitted with at least one lug (38) extending outwards and coplanar with the solid part (39) of the ring (37).

6. Assembly according to Claim 5, **characterised in that** the securing member (37) is said flat ring equipped with five lugs (38) extending outwards and coplanar with the solid part (39) of the ring (37).

7. Assembly according to one of Claims 5 or 6, **characterised in that** the ring (37) comprises two reliefs (40) extending towards the internal lumen of the ring (37), coplanar with the solid part (39) of the ring and adapted to cooperate with the stops (32) of the ramp (31) when the ring is in position on the part (29) of larger diameter of the rotor (25).

8. Assembly according to Claim 5 or 6, **characterised in that** the internal face (33) of the head (3) is provided with an annular groove (35) adapted to receive the tab(s) (38) of the ring (37) when the head (3) is in the freely rotating configuration.

9. Assembly according to Claim 8, **characterised in that** the internal face (33) of the head (3) is provided with at least one longitudinal groove (34), one end of which opens onto the annular groove (35) and adapted to receive at least one lug (38) of the ring (37) when the head (3) is integral in rotation with the body (2).

10. Assembly according to Claim 9, **characterised in that** the internal face (33) of the head (3) is provided with five longitudinal grooves (34), one end of which opens onto the annular groove (35) and adapted to receive five lugs (38) of the ring (37) when the head (3) is integral in rotation with the rotor (25).

11. Assembly according to Claim 3, **characterised in that** the operating key (9; 90) comprises said at least one member (11; 110) for rotating the rotor (25) equipped with at least one magnet of complementary polarity to said at least one magnet adapted to be housed (27) in the rotor (25).
